# EUROPEAN PATENT SPECIFICATION

(11) **EP 1 024 093 B1**
(45) Date of publication and mention of the grant of the patent: **07.07.2004**
(21) Application number: 99830029.7
(22) Date of filing: 26.01.1999
(51) Int. Cl.: B65D 65/46, B65D 65/14, B65D 85/671, B65B 25/14

(54) **Biodegradable wrapper for packing products such as toilet paper rolls and corresponding packaging method**
Biologisch abbaubare Wickelfolie zum Verpacken von Produkten wie Toilettenpapierrollen und zugehörige Verpackungsmethode
Feuille d'enveloppement biodégradable pour emballer des produits tels que des rouleaux de papier de toilette et méthode d'emballage correspondante

(43) Date of publication of application: 02.08.2000
(73) Proprietor: Policarta S.r.l., 01030 Bassano in Teverina VT (IT)
(72) Inventor: Giusti, Arturo, Strada Statale Ortana Km 19,000, 01030 Bassano in Teverina (VT) (IT)
(74) Representative: Steinfl, Alessandro

(56) References cited:
- EP-A- 0 225 987
- EP-A- 0 765 744
- WO-A-92/19508
- DE-A- 4 308 273
- FR-A- 2 658 786

## Description

The present invention relates to a highly biodegradable flexible wrapper for the packing of products such as absorbing and toilet paper rolls and the like, and method for the forming thereof.

At present, products such as absorbing and toilet paper rolls and the like as mop-all papers or of the "tissue" type, are wrapped by wrapping them in a film made of plastic material, for instance polyethylene, sealed on the products itself by thermal sealing.

This type of wrapping has the drawback of not being de facto biodegradable. Its replacement with a material better suited for the disposal is therefore desirable.

For this purpose wrappers made of a cellulose-based laminated material have been proposed, for instance wrapping paper and /or cellophane to wrap said products in packs.

Such wrappers cannot be thermally sealed as they lack a plastic base, in comparison to the abovedescribed wrapping process require for their application in wrapping processes an additional step, in which glue dots are formed between the sealing edges of the wrapper.

This additional step, besides complicating the process and increasing the cost thereof, requires a structural modification of the wrapping-forming apparatuses. In particular, compared with the apparatuses adapted for the thermal sealing, it requires the presence of nozzles for the deposition of the aforesaid glue dots.

The present invention overcomes such problems by providing a highly biodegradable flexible wrapper for the wrapping of products such as absorbing and toilet paper rolls and the like,
characterised in that it is obtained by a shaped portion of laminated sheet material obtained from a tape developing along a main direction and having transversal edges and longitudinal edges with respect to said main direction, on said portion being identified:
an outer face comprising at least two transversal depositions of thermally active glue placed along respective transversal edge regions of said portion; and
an inner face comprising at least one longitudinal deposition of thermally active glue near to a longitudinal edge of said portion.

Moreover, a method for the forming of a highly biodegradable flexible wrapper for the wrapping of products such as absorbing and toilet paper rolls and the like is provided, characterised in that it comprises the steps of:
providing a portion of laminated sheet material obtained from a tape developing along a main direction and having transversal edges and longitudinal edges with respect to said main direction, on said portion being identified an outer face comprising at least two transversal depositions of thermally active glue placed along respective transversal edge regions of said portion and an inner face comprising at least one longitudinal deposition of thermally active glue near to a longitudinal edge of said portion;
wrapping said portion on the products in in order to obtain an overlapping between the longitudinal edges thereof;
sealing the overlapping region between the longitudinal edges by tempering of said longitudinal deposition of thermally active glue;
forming respective front and rear transversal edges of the wrapper; and
sealing therebetween the front and rear edges by tempering of said at least two transversal depositions of thermally active glue.

Advantageous features of the present invention are provided in the dependent claims thereof.

The main advantage of the present invention lies in the fact that the forming of the wrapper takes place with the usual apparatuses provided for the forming of polyethylene wrappers or of similar wrappers of polythene material. The sealing of the wrapper will take place by tempering of the thermally active glue layers deposited in preferred areas of the portion of laminated material, along both faces thereof. Therefore, for thermally active glue it is meant a glue that does not exert its glueing action if it is not thermally tempered.

The various glue depositions along privileged areas are performed according to modes known in the art, for instance with the apparatus of in the European patent 0 765 744 in the name of the same applicant.

The present invention will be disclosed hereinafter with reference to its embodiments, given by way of example and not for limitative purposes. Reference to the figures of the annexed drawings will be made, wherein:
figures 1A and 1B show a first embodiment of the outer and inner faces respectively, of a portion of laminated material of a substantially rectangular shape apt to form the wrapper according to the present invention;
figures 2A and 2B show a second embodiment thereof;
figures 3A and 3B show a third embodiment thereof, having a transparent region;
figures from 4A to 4H show the various steps of the wrapping of the wrapper on the products by the portion of laminated material of figures 3A and 3B;
figures 5A and 5B show a fourth embodiment of the outer and inner faces respectively of the portion of laminated material;
figures from 6A to 6D show the final steps of the wrapping of the wrapper on the products by the portion of laminated material of figures 5A and 5B; and
figures 7A and 7B show a fourth embodiment of the portions of laminated material.

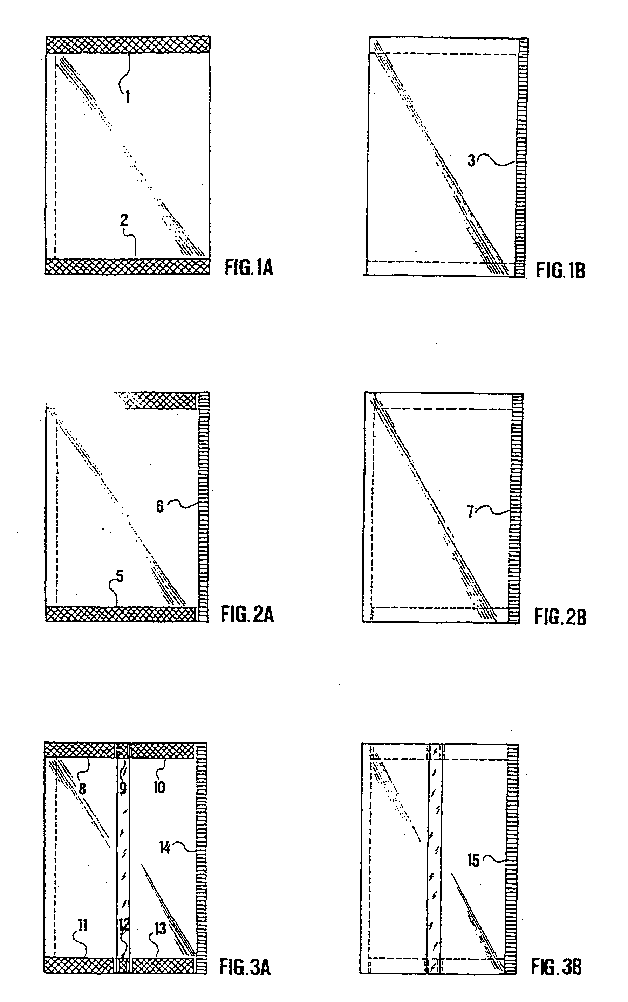

Figures 1A and 1B show portions of laminated material concerning a first embodiment of the present invention.

The portion of laminated material is obtained starting from a tape developing along a main direction. Such portion - of a substantially rectangular shape in the figures - has transversal edges and longitudinal edges with respect to the aforesaid main direction.

Figure 1A shows a plan view of the outer face of the portion of laminated material apt to form the wrapper. For outer face, it is to be understood here the face opposed to the face which is in contact with the product to be wrapped. Two transversal glue depositions are shown, indicated with 1 and 2, placed along respective transversal edge regions of the tape portion.

Figure 1B shows a plan view of the inner face of the tape portion apt to form the wrapper. The relation between figures 1A and 1B is that the second figure is obtained with a 180° rotation of the first figure along the longitudinal axis. This is also valid for the next figures 2, 3 and 5. For inner face, it is to be understood the face which is in contact with the product to be wrapped. A longitudinal glue deposition is shown, indicated with 3, placed along a right longitudinal edge region of the tape portion. However, the region 3 might alternatively be provided along the left longitudinal edge region.

The parts shown as hatched in figures 1A and 1B refer to glue depositions on the face opposed to the face respectively represented.

Figures 2A and 2B show portions of laminated material concerning a second embodiment of the present invention.

Figure 2A shows a plan view of the outer face of the portion of laminated material apt to form the wrapper. Two transversal glue depositions are shown, indicated with 4 and 5, placed along respective transversal edge regions of the tape portion. Furthermore, a longitudinal glue deposition is shown, indicated with 6, placed along a right longitudinal edge region of the portion of laminated material.

Figure 2B shows a plan view of the inner face of the portion of laminated material. A longitudinal glue deposition is shown, indicated with 7, placed along a right longitudinal edge region of the tape portion.

The longitudinal deposition regions 6 and 7 might be placed either both along respective right longitudinal edge regions of the outer face and right longitudinal edge regions of the inner face, as shown in figures 2A and 2B, or along respective left longitudinal edge regions of the outer face and left longitudinal edge region of the inner face.

Figures 3A and 3B show portions of laminated material concerning a third embodiment of the present invention. In this embodiment it is advantageously provided that the portion of laminated material is such as to comprise a strip of translucent material, for instance cellophane. Thus, the vision of the product is made possible. The sealing between paper and cellophane is performed by glueing. However, it must be noted that the percentage of translucent material is anyway low with respect to the entire surface of the tape portion devoted to the wrapping. Therefore, a highly biodegradable product is obtained even in the case in which a material such as polyethylene is used.

Although in such an example of composite material glue depositions can be provided such as those shown in the preceding figures, figures 3A and 3B show a particularly effective deposition, wherein the transversal glue depositions are as that they do not involve the regions of overlapping between paper and cellophane.

Figure 3A shows a plan view of the outer face of the composite material portion apt to form the wrapper. Two transversal glue depositions are shown, placed along respective transversal edge regions of the composite material portion. The first transversal deposition is such to provide areas 8, 9, 10. The second transversal deposition is such to provide areas 11, 12, 13. In particular, between the areas 8-9, 9-10, 11-12, 12-13 regions of rectangular shape are shown wherein no deposition whatsoever is provided. Such a transversal deposition allows the tape thickness to be kept substantially even in correspondence of the regions of transversal deposition. In fact, one has to take into account that the overlapping regions between paper and cellophane present an additional glue layer. The thickness uniformity is important once the composite continuous tape, from which the various portions of composite material are obtained in order to perform the wrapping, results wound up in a reel shape. Marked unevenness in the thickness size may in fact lead to a tempering of the glue, with a consequent undesired reciprocal adherence of the various coil turns.

Resuming the figure description, a further longitudinal glue deposition is shown, indicated with 14, placed along a right longitudinal edge region of the portion of composite material.

Figure 3B shows a plan view of the inner face of the composite material portion apt to form the wrapper. A longitudinal glue deposition is shown, indicated with 15, placed along a right longitudinal edge region of the composite material portion.

The longitudinal deposition regions 14 and 15 might be placed either both along respective right longitudinal edge regions of the outer face and right longitudinal edge regions of the inner face as shown in figures 3A and 3B, or along respective left longitudinal edge regions of the outer face and left longitudinal edge regions of the inner face.

The next figures from 4A to 4H show the various wrapping steps of the wrapper on the products by the embodiment of the composite material portion according to figures 3A and 3B.

Figures from 4A to 4C show the steps prior to the first tempering of a thermally active glue in order to obtain the wrapper, i.e. the tempering of the longitudinally placed thermally active glue.

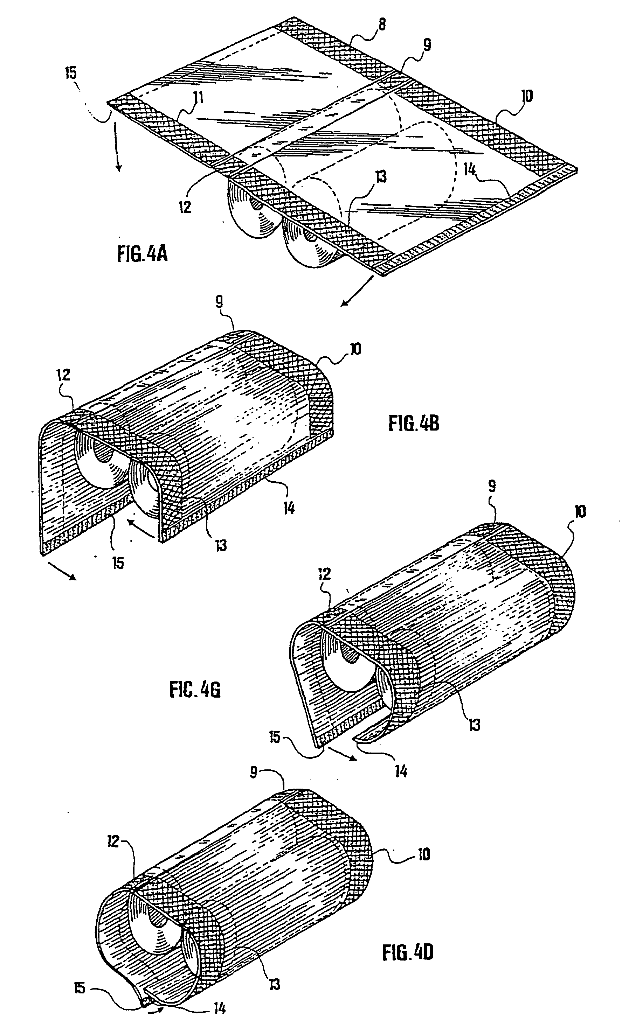

Figure 4D shows in particular the moment wherein an overlapping between the longitudinal inner layer 15 and the longitudinal outer layer 14 is obtained. In order to achieve an effective longitudinal sealing, a longitudinal glue deposition on both faces is preferable, although not essential, as the one shown in figures 2A-2B and 3A-3B. However, it has to be remarked that longitudinal sealings are possible also with longitudinal depositions such as those disclosed in the embodiments of figures 1A-1B. However, as mentioned, the best sealing is obtained in presence of a longitudinal deposition along the outer face as well as along the inner face.

Then it can be remarked how, always in order to achieve an effective longitudinal sealing, it is unnecessary for the longitudinal deposition or depositions to be in contact with the longitudinal edges of the portions of the laminated material used, as it suffices for the former to be placed near to the edges thereof.

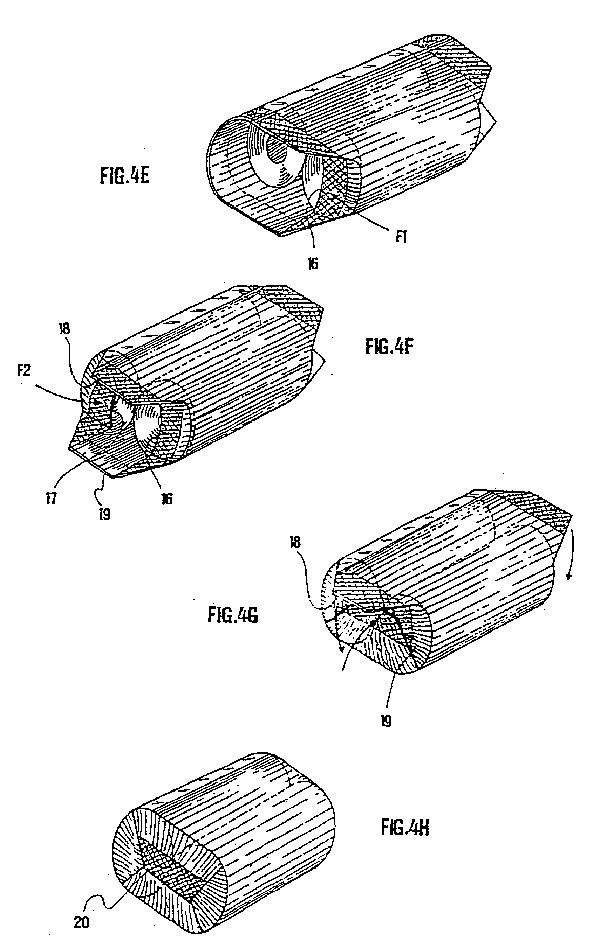

Figures 4E to 4G show the steps prior to the performing of the transversal sealing (or sealings).

In figure 4E the forming of a right front edge, indicated with 16, is shown by an arrow F1.

In figure 4F the forming of a left front edge, indicated with 17, is shown by an arrow F2. Furthermore, an upper edge 18 and a lower edge 19 are formed. Obviously, corresponding edges are provided along the wrapper rear region. All the folding steps described up to now are obtained with the use of pressing devices or the like, e.g. guns.

Figures 4G and 4H show the final steps for the forming of the wrapper, in which the upper edge 18 is overlapped onto the lower edge 19.

In this case as well, it is unnecessary for the transversal deposition or depositions to be in contact with the transversal edges of the portions of the laminated material used. Differently from what stated with reference to the longitudinal sealing, the transversal deposition regions might also not be placed near the edges themselves.

As it can be seen from figure 4H, a transversally deposited portion of the glue, indicated in figure with 20, is left unused. An advantageous embodiment of the present invention provides the absence of this portion from the transversal depositions of the preceding figures 1A, 2A and 3A.

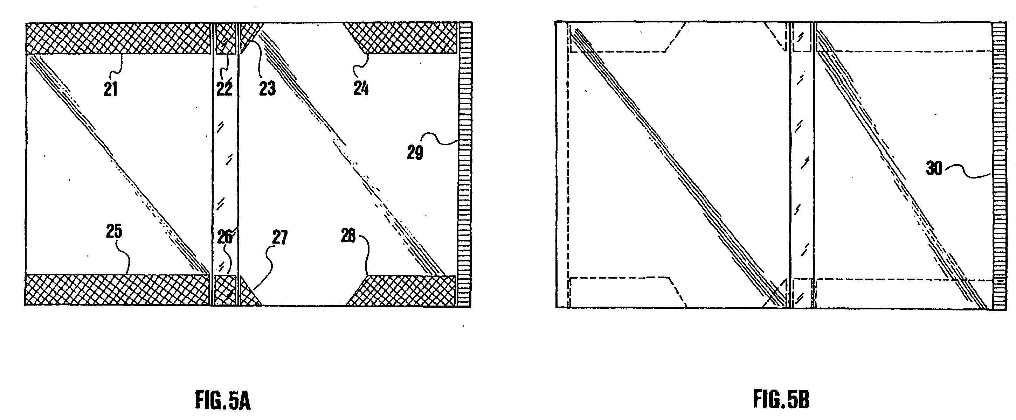

The following figures 5A and 5B show such a preferred embodiment. These figures relate to a portion of composite type material by way of example. Compared to the preceding figures, they are shown with an enlarged size for the sake of clarity.

Figure 5A shows a plan view of the outer face of the portion of laminated material. Two transversal glue depositions are present, placed along respective transversal edge regions of the portion of laminated material.

The first transversal deposition is such as to provide areas 21, 22, 23 and 24. In particular, between the transversal deposition area 23 and the transversal deposition area 24 a trapezoidally shaped region is shown, in which no deposition whatsoever is provided.

The second transversal deposition is such as to provide areas 25, 26, 27 and 28. In particular, between the transversal deposition area 27 and the transversal deposition area 28 a trapezoidally shaped region is shown wherein no deposition whatsoever is provided.

Moreover, in figure 5A the expedient already used with reference to the embodiment of figure 3A can be seen, i.e. no glue is deposited on the overlapping regions between paper and cellophane. Resuming the figure description, a longitudinal glue deposition is also present, indicated with 29, placed along a right longitudinal edge region of the tape portion.

Figure 5B shows a plan view of the inner face of the portion apt to form the wrapper. A longitudinal glue deposition is present, indicated with 30, placed along a right longitudinal edge region of the tape portion.

In this case as well it is to be understood that both the longitudinal deposition regions 29 and 30 might be placed either along respective right longitudinal edge region of the outer face and right longitudinal edge region of the inner face as represented in figures 5A and 5B, or along respective left longitudinal edge region of the outer face and left longitudinal edge region of the inner face.

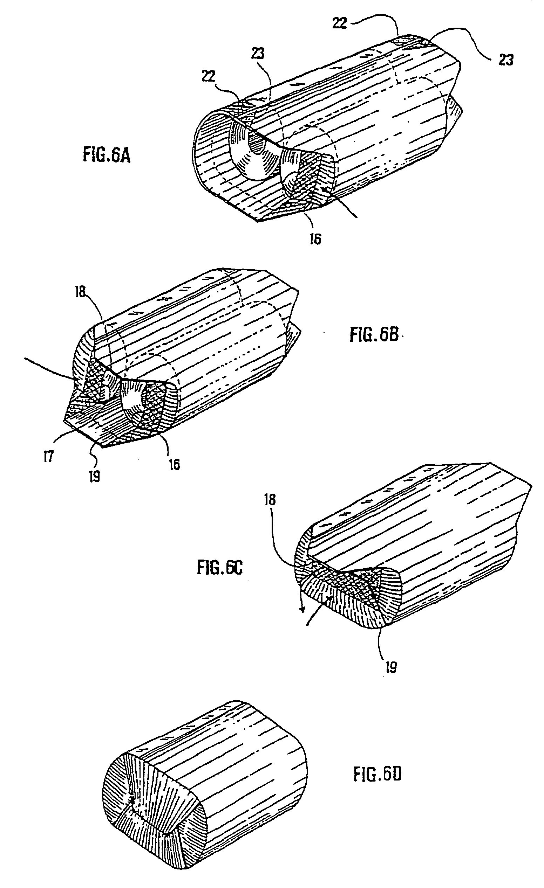

The following figures 6A to 6D relate to the final steps of the formation of the wrapper with the composite tape portion of the preceding figures 5A and 5B. These figures 6A-6D correspond to the preceding figures 4E-4H. It can be easily noted how with the transversal deposition of glue of the preceding figure 5A, the problem shown in the embodiment of figure 4H is greatly decreased, if not completely solved altogether.

With reference to the inner faces of the various embodiments of the tape portion of the preceding figures 1B, 2B, 3B and 5B, it has to be pointed out how the glue deposition has been such as to be reduced to a minimum, in order to prevent an intimate contact of the glue with the inserted sanitary product.

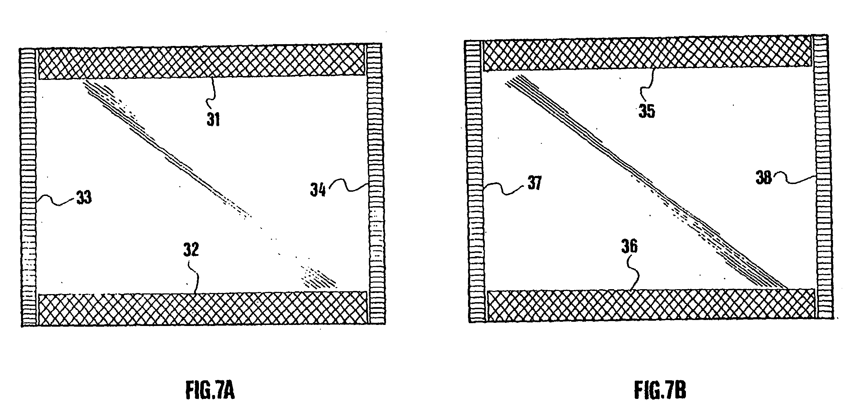

However, in the case where the composition of the glueing material is such as not to create problems when placed in contact with the inserted product, an embodiment such as the one shown in figures 7A and 7B can be provided.

With reference to figure 7A, two transversal depositions 31, 32, as well as two longitudinal depositions 33, 34 are shown on the inner face.

With reference then to figure 7B, also on the inner face two transversal depositions 35, 36 are shown, as well as two longitudinal depositions 37, 38.

Such an embodiment has the advantage of avoiding the creation of preferential winding directions, in the sense that no distinction anymore exists between outer face and inner face of the portion of laminated material.

The glue applying units will comprise means apt to form the deposition regions heretofore disclosed, for instance rubber plugs whose surface configuration will be such as to provide protruding areas and recessing areas. Therefore, the glue will be deposited onto the tape only in correspondence with the protruding areas of the plug.

In the case of depositions that are not particularly complicated such as a longitudinal deposition, rubber plugs of an annular type might be provided.

## Claims

1. A highly biodegradable flexible wrapper for the packing of products such as absorbing and toilet paper rolls and the like,
**characterised in that** it is obtained by a portion of laminated sheet material obtained from a tape developing along a main direction and having transversal edges and longitudinal edges with respect to said main direction, onto said portion being identified:
an outer face comprising at least two transversal depositions of thermally active glue (1,2;4,5;8-10,11-13;21-24,25-28;31,32) placed along respective transversal edge regions of said portion; and
an inner face comprising at least one longitudinal deposition of thermally active glue (3;7;15;30;38) near to a longitudinal edge of said portion.

2. The wrapper according to claim 1,
**characterised in that** said outer face comprises at least one longitudinal deposition of thermally active glue (6;14;29;34).

3. The wrapper according to any one of the preceding claims,
**characterised in that** each of said transversal depositions of thermally active glue has a substantially trapezoidal glue-free region.

4. The wrapper according to any of the preceding claims ,
**characterised in that** said inner face further comprises at least two transversal depositions of thermally active glue (35,36).

5. The wrapper according to any of the preceding claims,
**characterised in that** said portion of laminated sheet material further comprises a strip of translucent material sealed therewith, to allow a vision of the products once-the wrapper is formed,
**characterised in that** each of said transversal depositions of thermally active glue has glue-free regions in correspondence of the sealing regions between laminated sheet material and translucent material.

6. A method for the forming of a highly biodegradable flexible wrapper for the wrapping of products such as absorbing and toilet paper rolls and the like,
**characterised in that** it comprises the steps of:
providing a portion of laminated sheet material obtained from a tape developing along a main direction and having transversal edges and longitudinal edges with respect to said main direction, on said portion being identified an outer face comprising at least two transversal depositions of thermally active glue (1,2;4,5;8-10,11-13;21-24,25-28;31,32) placed along respective transversal edge regions of said portion and an inner face comprising at least one longitudinal deposition of thermally active glue (3;7;15;30;38) near a longitudinal edge of said portion;
wrapping said portion on the products in order to obtain overlapping between the longitudinal edges thereof;
sealing the overlapping region between the longitudinal edges by tempering of said longitudinal deposition of thermally active glue;
forming respective front and rear transversal edges of the wrapper; and
sealing therebetween the front and rear edges by tempering of said at least two transversal depositions of thermally active glue.

7. The method according to claim 6,
**characterised in that** said outer face further comprises at least one longitudinal deposition of thermally active glue (6;14;29;34).

8. The method according to claim 6 or claim 7,
**characterised in that** each of said transversal depositions of thermally active glue has a substantially trapezoidal glue-free region.

9. The method according to any one of the claims from 6 to 8,
**characterised in that** said inner face further comprises at least two transversal depositions of thermally active glue (35, 36).

10. The method according to any one of the claims from 6 to 9,
**characterised in that** said portion of laminated sheet material further comprises a strip of translucent material sealed therewith, to allow a vision of the products once the wrapper is formed,
**characterised in that** each of said transversal depositions of thermally active glue has glue free regions in correspondence of the sealing regions between the laminated sheet material and the translucent material.

## Patentansprüche

1. Biologisch leicht abbaubare flexible Hülle für das Verpacken von Produkten wie Absorptions- und Toilettenpapierrollen und dgl.,
**dadurch gekennzeichnet, dass** sie gewonnen wird durch einen Teil laminierten Flächenmaterials, der aus einem Band gewonnen wird, welches sich längs einer Hauptrichtung erstreckt, und Querränder und Längsränder in Bezug auf die Hauptrichtung hat,
wobei auf dem Teil gebildet sind:
eine äußere Seite, die wenigstens zwei Queraufträge von thermisch aktivem Klebstoff (1, 2; 4, 5; 8 - 10, 11 - 13; 21 - 24, 25 - 28; 31, 32) aufweist, die längs Querrandgebieten des Teils platziert sind; und
eine innere Seite, die wenigstens einen Längsauftrag von thermisch aktivem Klebstoff (3; 7; 15; 30; 38) nahe einem Längsrand des Teils aufweist.

2. Hülle nach Anspruch 1,
**dadurch gekennzeichnet, dass** die äußere Seite wenigstens einen Längsauftrag von thermisch aktivem Klebstoff (6; 14; 29; 34) aufweist.

3. Hülle nach einem der vorhergehenden Ansprüche,
**dadurch gekennzeichnet, dass** jeder der Queraufträge von thermisch aktivem Klebstoff ein im Wesentlichen trapezförmiges klebstofffreies Gebiet hat.

4. Hülle nach einem der vorhergehenden Ansprüche,
**dadurch gekennzeichnet, dass** die innere Seite weiter wenigstens zwei Queraufträge von thermisch aktivem Klebstoff (35, 36) aufweist.

5. Hülle nach einem der vorhergehenden Ansprüche,
**dadurch gekennzeichnet, dass** der Teil laminierten Flächenmaterials weiter einen Streifen durchsichtigen Materials aufweist, der mit ihm versiegelt ist, um die Sicht auf die Produkte zu gestatten, nachdem die Hülle gebildet worden ist,
**dadurch gekennzeichnet, dass** jeder der Queraufträge von thermisch aktivem Klebstoff klebstofffreie Gebiete in Entsprechung zu den Versieglungsgebieten zwischen dem laminierten Flächenmaterial und dem durchsichtigen Material hat.

6. Verfahren zum Bilden einer biologisch leicht abbaubaren flexiblen Hülle für das Verpacken von Produkten wie Absorptions- und Toilettenpapierrollen und dgl.,
**dadurch gekennzeichnet, dass** es die Schritte beinhaltet:
Bereitstellen eines Teiles laminierten Flächenmaterials, der aus einem Band gewonnen wird, das sich längs einer Hauptrichtung erstreckt, und Querränder und Längsränder in Bezug auf die Hauptrichtung hat, wobei auf dem Teil gebildet sind eine äußere Seite, die wenigstens zwei Queraufträge von thermisch aktivem Klebstoff (1, 2; 4, 5; 8 - 10, 11 - 13; 21 - 24, 25 - 28; 31, 32) aufweist, die längs Querrandgebieten des Teils platziert sind, und eine innere Seite, die wenigstens einen Längsauftrag von thermisch aktivem Klebstoff (3; 7; 15; 30; 38) nahe einem Längsrand des Teils aufweist;
Umhüllen der Produkte mit dem Teil, um eine Überlappung zwischen den Längsrändern desselben zu erzielen;
Versiegeln des Überlappungsgebietes zwischen den Längsrändern durch Härten des Längsauftrages von thermisch aktivem Klebstoff;
Bilden von vorderen und hinteren Querrändern der Hülle; und
Versiegeln der Vorder- und Hinderränder dazwischen durch Härten der wenigstens zwei Queraufträge von thermisch aktivem Klebstoff.

7. Verfahren nach Anspruch 6,
**dadurch gekennzeichnet,**
**dass** die äußere Seite weiter wenigstens einen Längsauftrag von thermisch aktivem Klebstoff (6; 14; 29; 34) aufweist.

8. Verfahren nach Anspruch 6 oder 7,
**dadurch gekennzeichnet, dass** jeder der Queraufträge von thermisch aktivem Klebstoff ein im Wesentlichen trapezförmiges klebstofffreies Gebiet hat.

9. Verfahren einem der Ansprüche 6 bis 8,
**dadurch gekennzeichnet, dass** die innere Seite weiter wenigstens zwei Queraufträge von thermisch aktivem Klebstoff (35, 36) aufweist.

10. Verfahren nach einem der Ansprüche 6 bis 9,
**dadurch gekennzeichnet, dass** der Teil laminierten Flächenmaterials weiter einen Streifen durchsichtigen Materials aufweist, der mit ihm versiegelt ist, um die Sicht auf die Produkte zu gestatten, nachdem die Hülle gebildet worden ist,
**dadurch gekennzeichnet, dass** jeder der Queraufträge von thermisch aktivem Klebstoff klebstofffreie Gebiete in Entsprechung zu den Versiegelungsgebieten zwischen dem laminierten Flächenmaterial und dem durchsichtigen Material hat.

## Revendications

1. Elément d'enveloppement souple très biodégradable destiné au conditionnement de produits tels que des rouleaux de papier absorbant et de papier hygiénique et analogues,
**caractérisé en ce qu'**il est obtenu par une partie de matériau en feuille stratifié obtenue à partir d'une bande se développant le long d'une direction principale, et ayant des bords transversaux et longitudinaux par rapport à ladite direction principale, sur ladite partie étant identifiées :
une face extérieure comportant au moins deux dépôts transversaux de colle active thermiquement (1, 2 ; 4, 5 ; 8 à 10, 11 à 13 ; 21 à 24, 25 à 28 ; 31, 32) placés le long de zones de bord transversal respectives de ladite partie, et
une face intérieure comportant au moins un dépôt longitudinal de colle active thermiquement (3 ; 7 ; 15 ; 30 ; 38) à proximité d'un bord longitudinal de ladite partie.

2. Elément d'enveloppement selon la revendication 1, **caractérisé en ce que** ladite face extérieure comporte au moins un dépôt longitudinal de colle active thermiquement (6 ; 14 ; 29 ; 34).

3. Elément d'enveloppement selon l'une quelconque des revendications précédentes,
**caractérisé en ce que** chacun desdits dépôts transversaux de colle active thermiquement a une zone sans colle sensiblement trapézoïdale.

4. Elément d'enveloppement selon l'une quelconque des revendications précédentes, **caractérisé en ce que** ladite face intérieure comporte de plus au moins deux dépôts transversaux de colle active thermiquement (35, 36).

5. Elément d'enveloppement selon l'une quelconque des revendications précédentes,
**caractérisé en ce que** ladite partie de matériau en feuille stratifié comporte de plus un ruban de matériau transparent scellé avec celle-ci, pour permettre une vision des produits une fois que l'élément d'enveloppement est formé,
**caractérisé en ce que** chacun desdits dépôts transversaux de colle active thermiquement a des zones sans colle qui correspondent aux zones de scellement entre le matériau en feuille stratifié et le matériau transparent.

6. Procédé pour la formation d'un élément d'enveloppement souple très biodégradable destiné à l'enveloppement de produits tels que des rouleaux de papier absorbant et de papier hygiénique et analogues,
**caractérisé en ce qu'**il comporte les étapes consistant à :
fournir une partie de matériau en feuille stratifié obtenue à partir d'une bande se développant le long d'une direction principale, et ayant des bords transversaux et des bords longitudinaux par rapport à ladite direction principale, sur ladite partie étant identifiées une face extérieure comportant au moins deux dépôts transversaux de colle active thermiquement (1, 2 ; 4, 5 ; 8 à 10, 11 à 13 ; 21 à 24, 25 à 28 ; 31, 32) placés le long de zones de bord transversal respectives de ladite partie, et une face intérieure comportant au moins un dépôt longitudinal de colle active thermiquement (3 ; 7 ; 15 ; 30 ; 38) à proximité d'un bord longitudinal de ladite partie,
envelopper ladite partie sur le produit pour obtenir un chevauchement entre les bords longitudinaux de celle-ci,
sceller la zone de chevauchement entre les bords longitudinaux par trempe dudit dépôt longitudinal de colle active thermiquement,
former des bords transversaux avant et arrière respectifs de l'élément d'enveloppement, et
sceller mutuellement les bords avant et arrière par trempe desdits au moins deux dépôts transversaux de colle active thermiquement.

7. Procédé selon la revendication 6,
**caractérisé en ce que** ladite face extérieure comporte de plus au moins un dépôt longitudinal de colle active thermiquement (6 ; 14 ; 29 ; 34).

8. Procédé selon la revendication 6 ou 7,
**caractérisé en ce que** chacun desdits dépôts transversaux de colle active thermiquement a une zone sans colle sensiblement trapézoïdale.

9. Procédé selon l'une quelconque des revendications 6 à 8,
**caractérisé en ce que** ladite face intérieure comporte de plus au moins deux dépôts transversaux de colle active thermiquement (35, 36).

10. Procédé selon l'une quelconque des revendications 6 à 9,
**caractérisé en ce que** ladite partie de matériau en feuille stratifié comporte de plus un ruban de matériau transparent scellé avec celle-ci, pour permettre une vision des produits une fois que l'élément d'enveloppement est formé,
**caractérisé en ce que** chacun desdits dépôts transversaux de colle active thermiquement a des zones sans colle qui correspondent aux zones de scellement entre le matériau en feuille stratifié et le matériau transparent.
